Europäisches Patentamt

European Patent Office

Office européen des brevets

(19)

(11) **EP 1 242 758 B1**

(12) **EUROPÄISCHE PATENTSCHRIFT**

(45) Veröffentlichungstag und Bekanntmachung des Hinweises auf die Patenterteilung:
**14.05.2003 Patentblatt 2003/20**

(21) Anmeldenummer: **00975903.6**

(22) Anmeldetag: **24.10.2000**

(51) Int Cl.⁷: **F16H 61/06**, F16D 48/06

(86) Internationale Anmeldenummer:
**PCT/EP00/10456**

(87) Internationale Veröffentlichungsnummer:
**WO 01/033111 (10.05.2001 Gazette 2001/19)**

(54) **VERFAHREN UND VORRICHTUNG ZUM STEUERN UND REGELN EINER KUPPLUNG IN EINEM AUTOMATISIERTEN STUFENGETRIEBE FÜR EIN KRAFTFAHRZEUG**

METHOD AND DEVICE FOR CONTROLLING AND ADJUSTING A CLUTCH IN AN AUTOMOTIVE AUTOMATIC STEPPED GEARBOX

PROCEDE ET DISPOSITIF DE COMMANDE ET DE REGULATION D'UN EMBRAYAGE DANS UNE BOITE AUTOMATIQUE ETAGEE POUR VEHICULE AUTOMOBILE

(84) Benannte Vertragsstaaten:
**DE FR GB IT**

(30) Priorität: **30.10.1999 DE 19952352**

(43) Veröffentlichungstag der Anmeldung:
**25.09.2002 Patentblatt 2002/39**

(73) Patentinhaber: **ZF FRIEDRICHSHAFEN Aktiengesellschaft**
**88038 Friedrichshafen (DE)**

(72) Erfinder:
- **VOHMANN, Martin**
  **73730 Esslingen (DE)**
- **DREIBHOLZ, Ralf**
  **88074 Meckenbeuren (DE)**
- **FOTH, Joachim**
  **88239 Wangen (DE)**

(56) Entgegenhaltungen:
EP-A- 0 707 998     DE-A- 3 935 438
DE-A- 4 409 122     US-A- 4 800 497
US-A- 5 527 238     US-A- 5 630 773

EP 1 242 758 B1

**Beschreibung**

Die Erfindung betrifft ein Verfahren zum Steuern und Regeln einer Kupplung in einem automatisierten Stufengetriebe für ein Kraftfahrzeug mit einer Zugkraftunterbrechung während des Schaltvorgangs, bei dem ein elektronisches Steuergerät mit zwei Regelkreisen das Verhalten der Kupplung bestimmt. Die Erfindung betrifft ferner eine Einrichtung zur Durchführung des Verfahrens zum Steuern und Regeln einer Kupplung in einem Kraftfahrzeugantrieb.

Unter einer Kupplung im Sinne der Erfindung ist eine Anfahrkupplung zu verstehen. Hierunter fallen Kupplungen, die zwischen einer Brennkraftmaschine und einem Automatgetriebe angeordnet sind, Wandlerüberbrückungskupplungen als auch im Automatgetriebe angeordnete Kupplungen und Bremsen, die sowohl zum Anfahren als auch als Schaltkupplung verwendet werden können.

Insbesondere betrifft die Erfindung nasslaufende Anfahrkupplungen, die im Automatgetriebe integriert sein können. Meistens sind solche Anfahrkupplungen jedoch als Baugruppe am Getriebeeingang angeordnet, beispielsweise auch als Anfahrelement in einem Automatgetriebe speziell in stufenlosen Getrieben (Continuously Variable Transmission) wird die nasse Anfahrkupplung auch als Baugruppe am Getriebeabtrieb angeordnet.

Üblicherweise werden Kupplungen und Bremsen im Automatgetriebe oder im automatisierten Stufengetriebe elektrohydraulisch betätigt, unabhängig vom Einsatz des Schaltelements als Gangwechselkupplung, Anfahrkupplung oder Wandlerüberbrückungskupplung. Hierzu werden üblicherweise fahrzeugspezifische, getriebespezifische und fahrzustandsabhängige Größen, wie beispielsweise Achs- und Gangübersetzungen, Motordrehmoment, Motordrehzahl, Fahrpedalstellung, oder ähnliche, in einem elektronischen Getriebesteuergerät verarbeitet und entsprechende kupplungsrelevante Ausgangssignale, beispielsweise zur Drucksteuerung bzw. Druckregelung oder während eines Gangwechsels oder zur Drehzahlregelung während eines Schlupfbetriebs, an ein hydraulisches Steuergerät übermittelt und dort mittels Aktuatoren und Hydraulikventil in hydraulische Steuerdrücke für die entsprechende Kupplung umgesetzt.

Ein Verfahren zum Steuern einer Anfahrkupplung ist unter anderem aus der gattungsgemäßen DE 44 09 122 A1 bekannt. Die Anfahr-Steuerung besteht hierbei aus zwei Phasen; in einer ersten Phase wird die Eingangsdrehzahl der Kupplung auf eine Solldrehzahl hingeführt, wobei die Solldrehzahl aus der Leistungsvorgabe des Fahrers und einer Fahraktivität festgelegt wird. In der zweiten Phase wird die Differenz der Eingangs- zur Ausgangsdrehzahl der Kupplung nach einem Sollwertverlauf auf Null reduziert.

Aus der DE 39 37 976 A1 ist ein Verfahren zur Regelung einer Kupplung bekannt, die zur Schwingungsentkopplung dient. Der Schlupf in der Kupplung wird hierbei in Abhängigkeit einer am Getriebeausgang ermittelten Drehungleichförmigkeit verändert.

Aus der EP 0 214 989 B2 wiederum ist bekannt, eine im Automatgetriebe integrierte Kupplung als Anfahrelement zu verwenden.

Die bislang unveröffentlichte DE 198 40 573 der Anmelderin beschreibt ein Verfahren zum Steuern und Regeln einer Kupplung in einem stufenlosen Automatgetriebe für ein Kraftfahrzeug, wonach die Kupplung während zwei Fahrzuständen mittels eines ersten Regelkreises gesteuert und geregelt wird; die Regelgröße entspricht hierbei dem Istwert einer Differenzdrehzahl der Kupplung. Der erste Zustand entspricht einem Anfahrvorgang und der zweite Zustand entspricht dem Fahren mit variabler Übersetzung.

Aus der ebenfalls noch unveröffentlichten DE 198 40 572 der Anmelderin ist ein Verfahren zum Steuern und Regeln einer Kupplung in einem automatisierten Stufengetriebe mit Zugkraftunterbrechung, bzw. in einem automatisierten lastschaltbaren Stufengetriebe bekannt. Dabei wird während drei Fahrzuständen mittels eines ersten Regelkreise gesteuert, bzw. geregelt; die Regelgröße entspricht dem Istwert einer Differenzdrehzahl der Kupplung. Der erste Zustand entspricht einem Anfahrvorgang, der zweite Zustand entspricht dem Fahren mit konstanter Übersetzung und der dritte Zustand liegt dann vor, wenn eine Lastschaltung, bzw. eine Verstellung der Übersetzung von einer ersten in eine zweite Übersetzungsstufe des Automatgetriebes initiiert wird.

Der vorliegenden Erfindung liegt die Aufgabe zugrunde, ausgehend von dem vorbeschriebenen Stand der Technik, ein Verfahren zum Steuern und Regeln einer Kupplung in einem automatisierten Stufengetriebe für ein Kraftfahrzeug sowie eine Vorrichtung zur Durchführung des Verfahrens zum Steuern und Regeln der Kupplung anzugeben und diese im Hinblick auf die Mehrfachnutzung einer einzigen Kupplung, insbesondere bezüglich verbesserter Regelqualität und Regeldynamik, in Verbindung mit einem automatisierten Stufengetriebe weiterzuentwickeln.

Diese Aufgabe wird erfindungsgemäß durch die Gegenstände der unabhängigen Ansprüche gelöst. Weitere vorteilhafte Ausgestaltungen der Erfindung sind in den Unteransprüchen beschrieben.

Die Erfindung besteht vorteilhafterweise darin, daß zur Steuerung und Regelung der Kupplung während eines ersten Fahrzustands der erste Regelkreis verwendet wird; die Regelgröße entspricht dem Istwert der Motordrehzahl n_MOT_IST, welche der Eingangsdrehzahl der Kupplung entspricht. Während des zweiten Fahrzustands wird ein zweiter Regelkreis verwendet, dessen Regelgröße dem Istwert der Differenzdrehzahl der Kupplung dnK_IST äquivalent ist, und schließlich wird während des dritten Fahrzustands die Kupplung mit einem gesteuerten, von verschiedenen Einflußgrößen abhängigen Druckwert beaufschlagt. Die drei Fahrzustände entsprechen hierbei einem Anfahrvorgang unterhalb einer Fahrzeuggrenzgeschwindigkeit im Zugbetrieb als erstem Zustand, dem Fahren jenseits des Anfahrvorgangs oberhalb einer Fahrzeuggrenzgeschwindigkeit mit einem positiven oder negativen Moment im Zug- bzw. Schubbetrieb als zweitem Zustand sowie dem Fahren unterhalb einer Fahrzeuggrenzgeschwindigkeit mit negativem Moment am Abtrieb im Schubbetrieb während des dritten Zustands, wobei sich der Anfahrvorgang von den anderen Fahrzuständen dadurch unterscheidet, daß die Fahrzeuggeschwindigkeit kleiner einem Grenzwert ist und der Fahrzeugmotor unterhalb dieser Grenzgeschwindigkeit abgewürgt werden kann.

Durch das erfindungsgemäße Verfahren wird vorteilhafterweise eine bessere Reaktion der Getriebesteuerung auf Lastwechsel erreicht, insbesondere beim Gaswegnehmen in dem dritten Zustand, da hier der Druckwert der Kupplung nur gesteuert und nicht geregelt ist.

Ferner wird die Kupplungsdifferenzdrehzahl nicht bis zu einem Wert Null nachgeführt, so daß hierdurch vorteilhafterweise eine Schwingungsentkopplung zwischen dem Motor und dem Getriebe erreicht wird.

In einer Weiterbildung der Erfindung wird vorgeschlagen, das Druckniveau pAK der Kupplung im ersten und im zweiten Zustand aus der Summe aus einem Offsetwert pAK_OFF und einem Summenwert pSUM zu berechnen. Der Summenwert pSUM wird maßgeblich aus der Bilanz von dem gesteuerten Moment MK(ST) der Kupplung, dem geregelten Summenmoment MK(RE)' der Kupplung und entkoppeltem Lastschaltmoment MLS_ENT bestimmt.

Das gesteuerte Moment MK(ST) wird maßgeblich aus dem dynamischen Moment der Kupplung MDYN_K und dem Motormoment MMOT bestimmt.

Das geregelte Summenmoment MK(RE)' der Kupplung wird aus dem dynamischen Motormoment MDYN_MOT und einem geregelten Moment MK(RE) bestimmt.

Das geregelte Moment MK(RE) im ersten Fahrzustand wird maßgeblich aus dem Soll-/Ist-Vergleich einer der Motordrehzahl n_MOT äquivalenten Größe und einer Leistungsvorgabe DKI eines Fahrers mittels eines Reglers bestimmt.

Die gangabhängige Solldifferenzdrehzahl dn_SW(i) für einen Anfahrgang des automatisierten Stufengetriebes wird im zweiten Fahrzustand über ein Kennfeld KF(i) bestimmt. Dieses Kennfeld stellt dabei eine Zuordnung von Leistungsvorgabe des Fahrers DKI und Abtriebsdrehzahl nAB der Kupplung dar.

Während einer zugkraftunterbrochenen Schaltung des automatisierten Stufengetriebes erfolgt vorteilhafterweise eine Umschaltung von einem gangabhängigen Kennfeld KF(i1) auf ein Kennfeld KF(i2).

Das geregelte Moment im zweiten Fahrzustand MK(RE) wird maßgeblich aus dem Soll-/Ist-Vergleich der Drehzahldifferenz dnK_SW, dnK_IST der Kupplung und einer Leistungsvorgabe DKI eines Fahrers mittels eines Reglers bestimmt.

Vorteilhafterweise beinhaltet der Regler einen begrenzten Integrator, wobei dem Integrator als Eingangsgrößen die Regelabweichung aus dem Soll-/Ist-Vergleich der Drehzahldifferenz dnK_SW, dnK_IST der Kupplung, die Verstellgeschwindigkeit der Leistungsvorgabe DKI und dem Verhältnis Ist- zu Sollwert der Differenzdrehzahl dnK_IST/dnK_SW der Kupplung zugeführt wird.

Vorteilhafterweise wird bei einem Übergang von dem ersten oder dritten Fahrzustand in den zweiten Fahrzustand der Sollwert der Differenzdrehzahl dnK_SW über ein Filter, insbesondere ein dynamisches Verzögerungsglied geleitet, wobei als Anfangswert des Verzögerungsglieds der aktuelle Istwert der Differenzdrehzahl dnK_IST gesetzt wird.

Auch hier erfolgt die Umschaltung zwischen den gangabhängigen Kennfeldern während der zugkraftunterbrochenen Schaltung.

Die Kennfelder sind hierbei derart gestaltet, daß sich bei einer Fahrzeuggeschwindigkeit v kleiner einem Grenzwert GW eine erhöhte Differenzdrehzahl dn_SW(i) der Kupplung ergibt. Hierdurch wird ein aktiver Abwürgeschutz für Nichtanfahrgänge, also z. B. dem vierten oder fünften Gang des automatisierten Stufengetriebes, erzielt.

Vorteilhafterweise wird auch im zweiten Fahrzustand bei einer Fahrzeuggeschwindigkeit v kleiner einem Grenzwert GW eine erhöhte Differenzdrehzahl dn_SW(i) der Kupplung als Abwürgeschutz berechnet. Dabei ist die erhöhte Differenzdrehzahl dn_SW(i) größer eingestellt als die Differenz aus der minimalsten Drehzahl der Brennkraftmaschine n_MOT_MIN und der Abtriebsdrehzahl der Kupplung nAB.

Im dritten Fahrzustand ergibt sich das Druckniveau pAK der Kupplung aus einem Druckwert, welcher von einer oder mehreren der folgenden Größen abhängig ist: Drosselklappenstellung, Bremsbetätigung, Bremsdruck, Motormoment, Lastschaltung oder ähnliches und wobei der Druckwert eine gesteuerte Größe ist.

Vorteilhafterweise wird auch eine Vorrichtung zur Durchführung eines Verfahrens zum Steuern und Regeln einer Kupplung in einem automatisierten Stufengetriebe für ein Kraftfahrzeug angegeben. Hierzu sind ein elektronisches Steuergerät mit einem ersten und einem zweiten Regelkreis vorgesehen, wobei die Regelgröße des ersten Regelkreises dem Istwert der Motordrehzahl und die Regelgröße des zweiten Regelkreises dem Istwert einer Differenzdrehzahl der Kupplung äquivalent ist.

Die Erfindung ist nachstehend anhand des in den Zeichnungen dargestellten Ausführungsbeispiels für eine zugkraftunterbrochene Schaltung erläutert. Es zeigen:

Fig. 1    eine Übersicht des ersten Regelkreises;

Fig. 2    Funktionsblock Sollwert-Vorgabe;

Fig. 3    Funktionsblock Regler;

Fig. 4    Kennfeld für Nicht-Anfahrgänge.

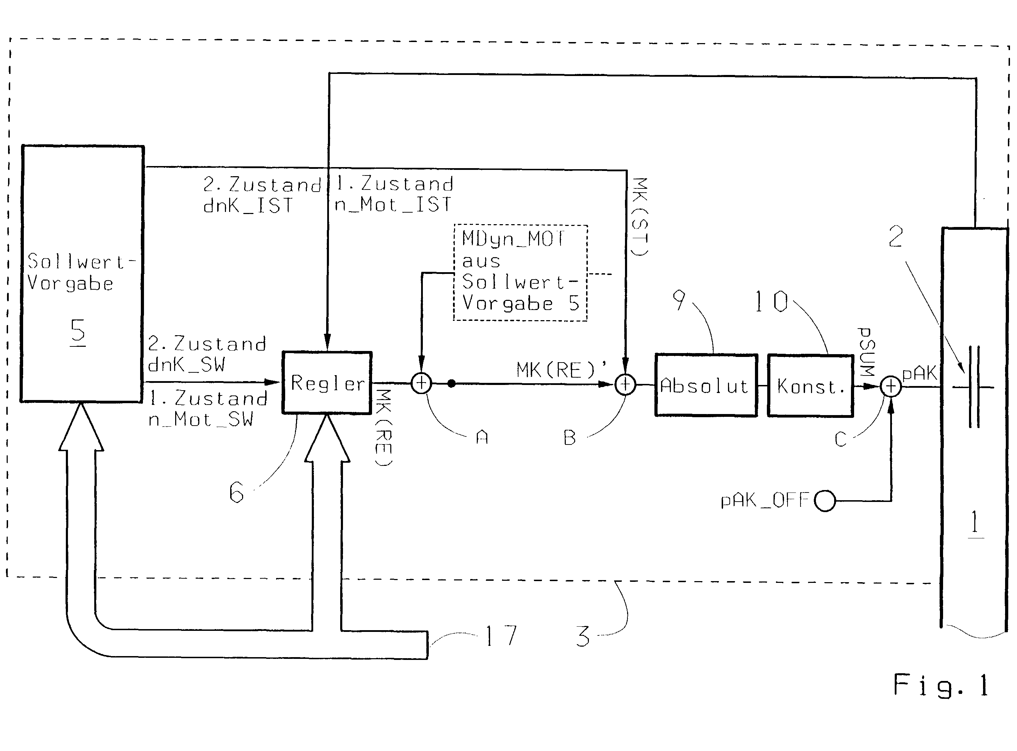

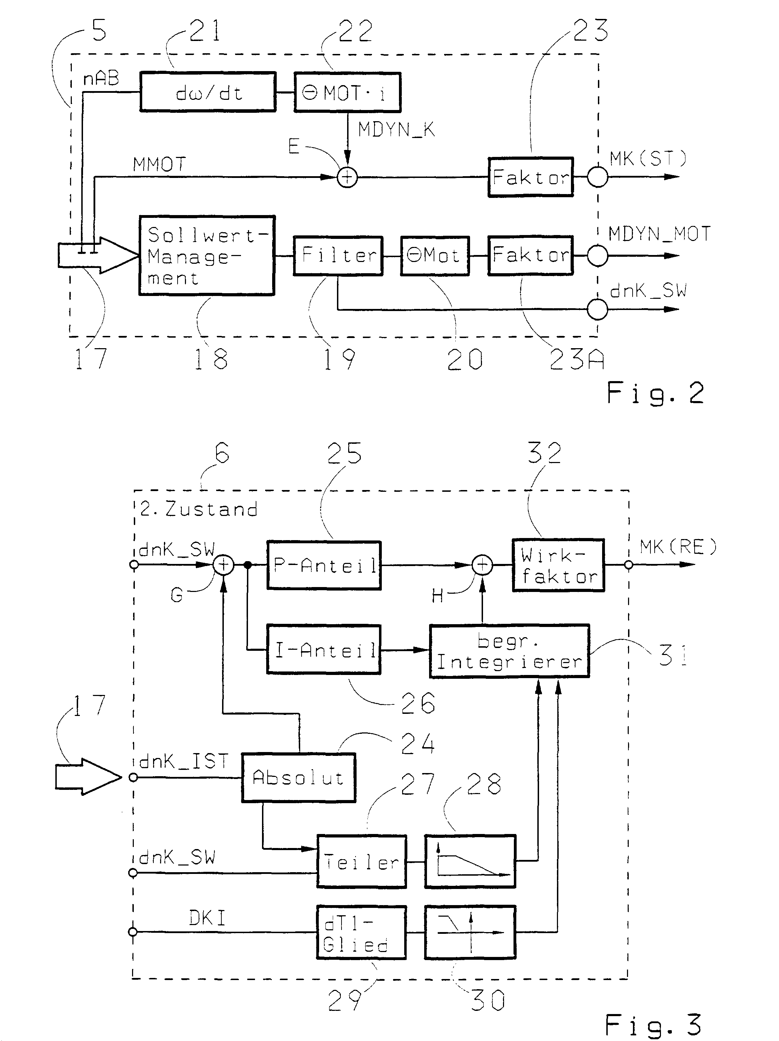

Fig. 1 zeigt den ersten Regelkreis 3 zur Steuerung und Regelung der Kupplung 2. Unter Kupplung 2 im Sinne der Erfindung ist eine Anfahrkupplung zu verstehen. Diese kann dem automatisierten Stufengetriebe 1 vorgeschaltet sein oder der Wandlerüberbrückungskupplung oder einer im Getriebe integrierten Kupplung entsprechen. Dem ersten Regelkreis 3, 4 werden Eingangsgrößen 17 zugeführt. Eingangsgrößen 17 sind: das Signal der Leistungsvorgabe durch einen Fahrer, z. B. Drosselklappeninformation DKI bzw. deren Gradient, das Moment einer nicht dargestellten Brennkraftmaschine, welches das automatisierte Stufengetriebe 1 antreibt und die Ein-/Ausgangsdrehzahl der Kupplung 2. Der Regelkreis 3 besteht aus den Blöcken: Sollwert-Vorgabe 5, Regler 6, Absolutwert 9 und Konstante 10. Die Sollwert-Vorgabe 5 liefert als Ausgangsgrößen den Regler-Sollwert und das gesteuerte Moment MK(ST) der Kupplung 2 sowie das dynamische Motormoment MDYN_MOT. Die innere Struktur der Sollwert-Vorgabe 5 wird in Verbindung mit der Fig. 2 erklärt. Am Regler 6 liegen die Eingangsgrößen 17, der Reglersollwert sowie der Istwert an. Im ersten Zustand entspricht der Regler-Sollwert der Motor-Solldrehzahl n_MOT_SW und der Istwert entspricht der Motor-Istdrehzahl n_MOT_IST. Im zweiten Zustand entspricht der Regler-Sollwert der Soll-Differenzdrehzahl an der Kupplung 2 dnK_SW und der Istwert entspricht der Ist-Differenzdrehzahl an der Kupplung 2 dnK_IST. Die innere Struktur des Reglers 6 wird in Verbindung mit der Fig. 3 erklärt. Ausgangsgröße des Reglers 6 ist das geregelte Moment MK(RE) der Kupplung 2. Aus dem geregelten Moment MK(RE) der Kupplung 2 und dem dynamischen Motormoment MDYN_MOT ergibt sich das geregelte Summenmoment MK(RE)', Summationspunkt A. Diese wird am Punkt B mit dem aus der Sollwert-Vorgabe 5 stammenden gesteuerten Moment MK(ST) der Kupplung 2 summiert. Von dieser Summe wird mittels des Funktionsblocks 9 der Absolutwert gebildet und das Ergebnis mit einer Konstanten gewichtet, Funktionsblock 10. Ausgangsgröße ist ein summierter Druck pSUM. Diesem summierten Druck pSUM wird am Summationspunkt C ein Druck-Offset pAK_OFF überlagert. Das sich hieraus ergebende Druckniveau pAK ist das auf die Kupplung 2 wirkende Druckniveau.

In Fig. 2 ist die innere Struktur der Sollwert-Vorgabe 5 dargestellt. Dieser werden die Eingangsgrößen 17 zugeführt. Im Funktionsblock 18, Sollwert-Management, wird aus den Eingangsgrößen Drehzahl der Brennkraftmaschine, Drosselklappeninformation DKI und Moment der Brennkraftmaschine ein Roh-Sollwert der Differenzdrehzahl der Kupplung 2 bestimmt. Dieser Wert wird sodann im Filter 19, üblicherweise als PT1-Glied mit Gradienten-Begrenzung ausgeführt, gefiltert. Eine Ausgangsgröße des Filters 19 ist der Sollwert dnk_SW der Differenzdrehzahl der Kupplung 2. Dieser Sollwert wird am Ausgang der Sollwert-Vorgabe 5 bereitgestellt. Eine weitere Ausgangsgröße des Filters 19 wird im Funktionsblock 20 mit dem Motorträgheitsmoment Theta-MOT und einem Faktor, Bezugszeichen 23A, verknüpft. Ausgangsgröße ist sodann das dynamische Moment der Brennkraftmaschine MDYN_MOT. Aus der Eingangsgröße Abtriebsdrehzahl der Kupplung nAB wird mittels des Funktionsblocks 21 der Winkelgeschwindigkeitsgradient dOmega/dt ermittelt. Das Ergebnis wird im Funktionsblock 22 mit dem Motorträgheitsmoment Theta-MOT und der aktuellen Übersetzung des automatisierten Stufengetriebes i multipliziert. Ausgangsgröße ist das dynamische Moment MDYN_K an der Kupplung 2. Hierbei gilt folgende Beziehung in der Gradient-Einstellphase:

$$MDYN\_K = Theta\text{-}MOT \cdot i1 \cdot dOmega/dt$$

Am Summationspunkt E wird sodann dieses dynamische Moment der Kupplung 2 mit dem von der Brennkraftmaschine abgegebenen Moment MMOT verknüpfe. Das Ergebnis wird am Summationspunkt F zu dem zuvor berechneten dynamischen Moment der Brennkraftmaschine MDYN_MOT addiert. Das Ergebnis wird im Funktionsblock 23 mit einem abstimmbaren Faktor gewichtet, dessen Ausgangsgröße das gesteuerte Moment MK(ST) der Kupplung 2 ist.

In Fig. 3 ist die innere Struktur des Reglers 6 dargestellt. Diesem werden die Eingangsgrößen 17 sowie der Sollwert dnK_SW und der Istwert dnK_IST der Differenzdrehzahl der Kupplung 2 zugeführt. Aus dem Istwert dnK_IST wird im Funktionsblock 24 der Absolutwert gebildet. Dieser Absolutwert ist sodann die Eingangsgröße für den Teiler 27 bzw. den Summationspunkt G. Auf den Teiler 27 ist als zweite Eingangsgröße der Sollwert dnK_SW der Differenzdrehzahl der Kupplung 2 geführt. Der Quotient ist auf den Funktionsblock 28, Kennlinie dynamisches Absenken, geführt. Über diese Kennlinie wird bei sehr kleinen Schlupfwerten, z. B. kleiner 10 Umdrehungen, der Eingangswert des Intergrierers, Bezugszeichen 31, künstlich vergrößert. Hierdurch wird eine zusätzliche rampenförmige Druckreduzierung erzielt. Der Einsatzpunkt ergibt sich aus dem Verhältnis von Ist- zu Sollwert der Drehzahldifferenz der Kupplung 2. Die Eingangsgröße Drosselklappeninformation DKI ist das Eingangssignal für ein dT1-Glied, Bezugszeichen 29. Das Ausgangssignal dieses Filters ist sodann das Eingangssignal für die Kennlinie "schnell Öffnen", Bezugszeichen 30. Über diese Kennlinie wird in Abhängigkeit der Leistungswunsch des Fahrers bzw. dessen Gradient bei schneller Gasrücknahme der Eingangswert des Integrierers 31 künstlich vergrößert. Hieraus ergibt sich eine zusätzliche rampenförmige Druckreduzierung. Die Druckreduzierung ist über die Kennlinie veränderbar.

Am Summationspunkt G wird der Sollwert dnK_SW mit dem im Funktionsblock 24 gebildeten Absolutwert des Istwertes der Differenzdrehzahl Kupplung 2 summiert. Das Ergebnis wird sodann parallel zum einen über einen Funktionsblock P-Anteil, Bezugszeichen 25, und zum zweiten über einen I-Anteil, Bezugszeichen 26, geführt. Die Ausgangsgröße des P-Anteils, Bezugszeichen 25, wirkt auf den Summationspunkt H. Die Ausgangsgröße des Funktionsblockes 26 wirkt auf den begrenzten Integrierer, Bezugszeichen 31. Der Ausgangswert des begrenzten Integrierers 31 wird am Summationspunkt H mit dem Proportional-Anteil aus dem Funktionsblock 25 verknüpft und auf den Funktionsblock 32, Wirkfaktor, geführt. Über den Wirkfaktor wird bestimmt, in welche Richtung das aktuelle Regelmoment wirken soll. Dies ist zur Bestimmung des entkoppelnden Moments MK_ENT notwendig.

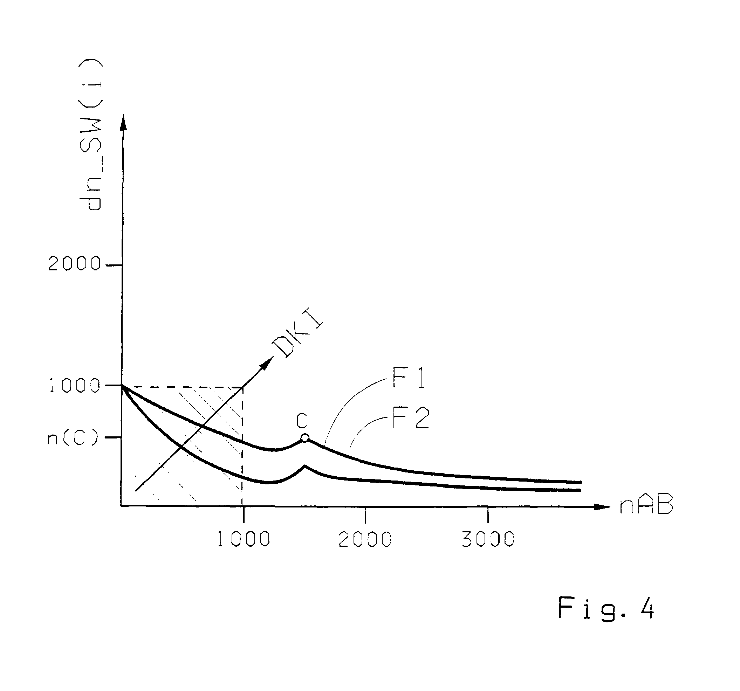

In Fig. 4 ist ein gangabhängiges Kennfeld KF(i) dargestellt. Über dieses Kennfeld KF(i) wird die Differenzdrehzahl dn_SW(i), also z. B. der fünfte Gang, des automatisierten Stufengetriebes bestimmt. Das Kennfeld enthält einen durch die beiden Begrenzungskennlinien F1 und F2 definierten Bereich. Die Begrenzungslinie F2 entspricht 0 % und die Begrenzungslinie F1 entspricht 100 % Drosselklappeninformation DKI. Auf der Begrenzungslinie F1 ist ein Punkt C eingezeichnet. Diese Drehzahlüberhöhung, Wert n(c), bewirkt, daß die Kupplung im schlupfenden Zustand gehalten wird, so daß eine aktive Schwingungsentkopplung erzielt wird. Innerhalb des Kennfelds ist ein schraffiert gezeichneter Bereich dargestellt. Dieser Bereich dient dem Abwürgeschutz, d. h., bei kleinen Abtriebsdrehzahlen nAB der Kupplung 2 wird diese mit einem definierten Sollwert der Differenzdrehzahl beaufschlagt.

Der Abwürgeschutz kann auch gemäß folgender Beziehung berechnet werden:

$$dnK\_SW(i) > NMOT\_MIN - nAB,$$

mit NMOT_MIN: minimalste Drehzahl der Brennkraftmaschine
nAB: Abtriebsdrehzahl der Kupplung 2.

Bezugszeichen

| 1 | automatisiertes Stufengetriebe |
|---|---|
| 2 | Kupplung |
| 3 | erster Regelkreis |
| 4 | zweiter Regelkreis |
| 5 | Sollwert-Vorgabe |
| 6 | Regler |
| 9 | Absolutwert |

| 10 | Konstante |
|---|---|
| 17 | Eingangsgrößen |
| 18 | Sollwert-Management |
| 19 | Filter |
| 20 | Trägkeitsmoment |
| 21 | Berechnungsblock dOmega/dt |
| 22 | Berechnungsblock |
| 23, 23A | Faktor |
| 24 | Absolutwert |
| 25 | P-Anteil |
| 26 | I-Anteil |
| 27 | Teiler |
| 28 | Kennlinie dynamisches Absenken |
| 29 | dT1-Glied |
| 30 | Kennlinie "schnell Öffnen" |
| 31 | begrenzter Intergrierer |
| 32 | Wirkfaktor |

| n_EIN | Eingangsdrehzahl Kupplung |
|---|---|
| n_AB | Abtriebsdrehzahl Kupplung |
| n_MOT | Motordrehzahl |
| n_NOT_IST | Istwert Motordrehzahl |
| n_NOT_SW | gangabhängige Solldrehzahl |
| n_MOT_MIN | Minimaldrehzahl Brennkraftmaschine |
| dn_SW(i) | gangabhängige Differenzdrehzahl Kupplung |
| dnK_SW | Sollwert Differenzdrehzahl Kupplung |
| dnk_IST | Istwert Differenzdrehzahl Kupplung |
| MK(ST) | gesteuertes Moment Kupplung |
| MK (RE) | geregeltes Summenmoment |
| MK_ENT | entkoppelndes Moment Kupplung |
| pAK_OFF | Druckoffset Anfahrkupplng |
| pSUM | summmierter Druck |
| pAK | Druckniveau Kupplung |
| MDYN_K | dynamisches Moment Kupplung |
| MMOT | Motormoment |
| MDYN_MOT | dynamisches Motormoment |
| DKI | Drosselklappeninformation = Laststellung |
| dnLS_SW | Sollwert-Offset |
| i1 | erste Übersetzungsstufe |
| i2 | zweite Übersetzungsstufe |
| KF(i) | Kennfeld |
| v | Fahrzeuggeschwindigkeit |
| GW | Grenzwert Fahrzeuggeschwindigkeit |
| CVT | Continuously Variable Transmission |

**Patentansprüche**

1. Verfahren zum Steuern und Regeln einer Kupplung in einem automatisierten Stufengetriebe für ein Kraftfahrzeug, bei dem ein elektronisches Steuergerät mittels eines ersten bzw. eines zweiten Regelkreises das Verhalten der Kupplung bestimmt, wobei zwei Fahrzustände vorgesehen sind und der erste Zustand einem Anfahrvorgang unterhalb einer Fahrzeuggrenzgeschwindigkeit im Zugbetrieb, der zweite Zustand dem Fahren oberhalb einer Fahrzeuggrenzgeschwindigkeit entspricht und daß eine zugkraftunterbrochene Schaltung von einer ersten (i1) in eine zweite Übersetzungsstufe (i2) durchführbar ist, wobei zur Steuerung und Regelung der Kupplung während des ersten Fahrzustands der erste Regelkreis verwendet wird und dessen Regelgröße dem Istwert der Motordrehzahl (n_MOT_IST) äquivalent ist und daß während des zweiten Fahrzustands ein zweiter Regelkreis verwendet wird, dessen Regelgröße dem Istwert einer Differenzdrehzahl (dnK_IST) der Kupplung äquivalent ist, **dadurch gekennzeichnet, daß** während eines dritten Fahrzustands, welcher dem Fahren unterhalb einer Fahrzeuggrenzgeschwindigkeit im Schubbetrieb entspricht, die Kupplung mit einem gesteuerten von verschiedenen Einflußgrößen abhängigen Druckwert beaufschlagt wird und daß der Istwert der Diffrenzdrehzahl (dnK_IST) der Kupplung nicht bis zu einem Wert Null nachgeführt ist.

2. Verfahren nach Anspruch 1, **dadurch gekennzeichnet, daß** das Druckniveau (pAK) der Kupplung sich im ersten und zweiten Zustand aus einem Offsetwert (pAK_OFF) und einem Summenwert (pSUM) ergibt (pAK = pAK_OFF + pSUM), wobei der Summenwert (pSUM) maßgeblich aus der Bilanz von gesteuertem Moment (MK(ST)) der Kupplung, geregeltem Summenmoment (MK(RE)') der Kupplung und entkoppelndem Lastschaltmoment (MLS_ENT) bestimmt wird (pSUM = f(MK(ST), MK(RE)', MLS_ENT)).

3. Verfahren nach Anspruch 2, **dadurch gekennzeichnet, daß** das gesteuerte Moment (MK(ST)) maßgeblich aus dem dynamischen Moment der Kupplung (MDYN_K) und dem Motormoment (MMOT) bestimmt wird (MK(ST) = f(MDYN_K, MMOT).

4. Verfahren nach Anspruch 2, **dadurch gekennzeichnet, daß** das geregelte Summenmoment (MK(RE)') der Kupplung aus dem dynamischen Motormoment (MDYN_MOT) und einem geregelten Moment (MK(RE)) der Kupplung bestimmt wird.

5. Verfahren nach Anspruch 4, **dadurch gekennzeichnet, daß** das geregelte Moment (MK(RE)) im ersten Fahrzustand maßgeblich aus dem Soll-/Ist-Vergleich einer der Motordrehzahl äquivalenten Größe und einer Leistungsvorgabe (DKI) eines Fahrers mittels eines Reglers bestimmt wird.

6. Verfahren nach einem der vorangehenden Ansprüche, **dadurch gekennzeichnet, daß** die gangabhängige Solldrehzahl (n_MOT_SW(i)) für einen Gang des automatisierten Stufengetriebes über ein Kennfeld KF(i) bestimmt wird, wobei dieses eine Zuordnung von Leistungsvorgabe des Fahrers (DKI) und Abtriebsdrehzahl (nAB) der Kupplung darstellt.

7. Verfahren nach Anspruch 6, **dadurch gekennzeichnet, daß** die Umschaltung von dem Kennfeld (KF(i1)) auf ein Kennfeld (KF(i2)) während der zugkraftunterbrochenen Schaltung erfolgt.

8. Verfahren nach Anspruch 4, **dadurch gekennzeichnet, daß** das geregelte Moment im zweiten Fahrzustand (MK(RE)) maßgeblich aus dem Soll-/Ist-Vergleich der Drehzahldifferenz (dnK_SW, dnK_IST) der Kupplung und einer Leistungsvorgabe (DKI) eines Fahrers mittels eines Reglers bestimmt wird.

9. Verfahren nach Anspruch 8, **dadurch gekennzeichnet, daß** der Regler einen begrenzten Integrator beinhaltet, wobei dem Integrator als Eingangsgrößen die Regelabweichung aus dem Soll-/Ist-Vergleich der Drehzahldifferenz (dnK_SW, dnK_IST) der Kupplung , die Verstellgeschwindigkeit der Leistungsvorgabe (DKI) und dem Verhältnis Ist- zu Sollwert der Differenzdrehzahl (dnK_IST/dnK_SW) der Kupplung zugeführt wird.

10. Verfahren nach einem der vorangehenden Ansprüche, **dadurch gekennzeichnet, daß** bei einem Übergang von dem ersten oder dritten Fahrzustand in den zweiten Fahrzustand der Sollwert der Differenzdrehzahl (dnK_SW) über ein dynamisches Verzögerungsglied geleitet wird, wobei als dessen Anfangswert der aktuelle Istwert der Differenzdrehzahl (dnK_IST) gesetzt wird.

11. Verfahren nach einem der vorangehenden Ansprüche, **dadurch gekennzeichnet, daß** bei einer Fahrzeuggeschwindigkeit (v) kleiner einem Grenzwert (GW) eine erhöhte Differenzdrehzahl (dn_SW(i)) der Kupplung als Abwürgeschutz über das jeweilige zweite Kennfeld (KF(i)) eingestellt wird.

12. Verfahren nach einem der vorangehenden Ansprüche, **dadurch gekennzeichnet, daß** im zweiten Zustand bei einer Fahrzeuggeschwindigkeit (v) kleiner einem Grenzwert (GW) eine erhöhte Differenzdrehzahl (dn_SW(i)) der Kupplung als Abwürgeschutz berechnet wird, wobei die Differenzdrehzahl (dn_SW(i)) größer eingestellt wird als die Differenz aus der minimalsten Drehzahl der Brennkraftmaschine (n_NOT_MIN) und der Abtriebsdrehzahl der Kupplung (nAB).

13. Verfahren nach Anspruch 1, **dadurch gekennzeichnet, daß** das Druckniveau (pAK) der Kupplung sich im dritten Zustand aus einem von einer oder mehreren der folgenden Größen abhängigen Druckwert ergibt: Drosselklappe, Bremsbetätigung, Bremsdruck, Motormoment, Lastschaltung.

**14.** Vorrichtung zur Durchführung eines Verfahrens zum Steuern und Regeln einer Kupplung in einem automatisierten Stufengetriebe für ein Kraftfahrzeug, insbesondere eines Verfahrens nach einem der vorgenannten Ansprüche, mit einem elektronischen Steuergerät mit einem ersten und einem zweiten Regelkreis, wobei die Regelgröße des ersten Regelkreises dem Istwert der Motordrehzahl (n_MOT_IST) und die Regelgröße des zweiten Regelkreises dem Istwert einer Differenzdrehzahl (dnK_IST) der Kupplung äquivalent ist und der Istwert der Differenzdrehzahl (dnK_IST) der Kupplung nicht bis zu einem Wert Null nachgeführt ist.

**Claims**

**1.** Method for the control and adjustment of a clutch in an automatic geared transmission for a motor vehicle, in which an electronic control device determines the behaviour of the clutch by means of a first and a second control loop, two driving states being provided and the first state corresponding to a starting process below a vehicle limit velocity in traction operation, the second state corresponding to driving above a vehicle limit velocity, and that traction-interrupted changing from a first (i1) to a second (i2) transmission step can be executed, the first control loop being used to control and adjust the clutch during the first driving state and its regulating variable being equivalent to the actual value of the engine speed (n_MOT_IST) and that during the second driving state a second control loop is used, the regulating variable of which is equivalent to the actual value of a differential speed (dnK_IST) of the clutch, **characterized in that** during a third driving stets, which corresponds to driving below a vehicle limit velocity in thrust operation, the clutch is acted on by a controlled pressure value dependent on various influencing quantities and that the actual value of the differential speed (dnK_IST) of the clutch is not corrected down to a value zero.

**2.** Method according to claim 1, **characterized in that** the pressure level (pAK) of the clutch results in the first and second state from an offset value (pAK_OFF) and a cumulative value (pSUM) (pAK = pAK_OFF + pSUM), the cumulative value (pSUM) being determined substantially from the net result of controlled torque (MK(ST)) of the clutch, adjusted cumulative torque (MK(RE)') of the clutch and decoupled load switching torque (MLS_ENT) (pSUM = f(MK(ST), MK(RE)', MLS_ENT)).

**3.** Method according to claim 2, **characterized in that** the controlled torque (MK(ST)) is determined substantially from the dynamic torque of the clutch (MDYN_K) and the engine torque (MMOT) (MK(ST)) = f(MDYN_K, MMOT).

**4.** Method according to claim 2, **characterized in that** the adjusted cumulative torque (MK(RE)') of the clutch is determined from the dynamic engine torque (MDYN_MOT) and an adjusted torque (MK(RE)) of the clutch.

**5.** Method according to claim 4, **characterized in that** the adjusted torque (MK(RE)) in the first driving state is determined substantially from the target/actual comparison of a variable equivalent to the engine speed and a power input (DKI) of a driver by means of a controller.

**6.** Method according to one of the preceding claims, **characterized in that** the gear-dependent target speed (n_MOT_SW(i)) for a gear of the automatic geared transmission is determined via a characteristic KF(i), this representing an assignment of power input of the driver (DKI) and output speed (nAB) of the clutch.

**7.** Method according to claim 6, **characterized in that** the changeover from characteristic (KF(i1) to a characteristic (KF(i2)) takes place during the traction-interrupted changing.

**8.** Method according to claim 4, **characterized in that** the adjusted torque in the second driving state (MK(RE)) is determined substantially from the target/actual comparison of the speed difference (dnK_SW, dnK_IST) of the clutch and a power input (DKI) of a driver by means of a controller.

**9.** Method according to claim 8, **characterized in that** the controller contains a limited integrator, the deviation from the target/actual comparison of the speed difference (dnK_SW, dnK_IST) of the clutch, the adjustment speed of the power input (DKI) and the ratio actual to target value of the differential speed (dnK_IST/dnK_SW) of the clutch being supplied to the integrator as input variables.

**10.** Method according to one of the preceding claims, **characterized in that** in a transition from the first or third driving state to the second driving state, the target value of the differential speed (dnK_SW) is controlled via a dynamic delay element, the current actual value of the differential speed (dnK_IST) being set as its initial value.

**11.** Method according to one of the preceding claims, **characterized in that** at a vehicle velocity (v) smaller than a limit value (GW) an increased differential speed (dn_SW(i)) of the clutch is set as a stalling protection via the respective second characteristic (KF(i)).

12. Method according to one of the preceding claims, **characterized in that** in the second state at a vehicle velocity (v) smaller than a limit value (GW) an increased differential speed (dn_SW(i)) of the clutch is calculated as a stalling protection, the differential speed (dn_SW(i)) set being greater than the difference of the smallest speed of the combustion engine (n_MOT_MIN) and the output speed of the clutch (nAB).

13. Method according to claim 1, **characterized in that** the pressure level (pAK) of the clutch results in the third state from a pressure value dependent on one or more of the following variables: throttle valve, brake actuation, brake pressure, engine torque, load switching.

14. Device for executing a method for the control and adjustment of a clutch in an automatic geared transmission for a motor vehicle, in particular a method according to one of the aforementioned claims, with an electronic control device with a first and a second control loop, the regulating variable of the first control loop being equivalent to the actual value of the engine speed (n_MOT_IST) and the regulating variable of the second control loop being equivalent to the actual value of a differential speed (dnK_IST) of the clutch and the actual value of the differential speed (dnK_IST) of the clutch not being corrected down to a value zero.

**Revendications**

1. Procédé pour commander et régler un embrayage dans une transmission à rapports étagés automatisée pour un véhicule automobile, dans lequel un appareil .de commande électronique détermine le comportement de l'embrayage au moyen d'un premier, respectivement d'un deuxième circuit de réglage, et dans lequel il est prévu deux états de conduite, le premier état correspondant à une opération de démarrage au-dessous d'une vitesse limite du véhicule dans le fonctionnement en traction, le deuxième état correspondant à la conduite au-dessus d'une vitesse limite du véhicule, et peut s'effectuer un passage sans interruption de la force de traction d'un premier rapport (i1) à un deuxième rapport (i2), le premier circuit de réglage étant utilisé pour la commande et le réglage de l'embrayage pendant le premier état de conduite et la grandeur réglée de ce circuit étant équivalente à la valeur réelle de la vitesse de rotation du moteur (n_MOT_IST), tandis que, dans le deuxième état de conduite, on utilise un deuxième circuit de réglage dont la grandeur réglée est équivalente à la valeur réelle de la vitesse de rotation différentielle (dnK_IST) de l'embrayage, **caractérisé en ce que**, pendant un troisième état de conduite qui correspond à la conduite au-dessous d'une vitesse limite de véhicule dans le fonctionnement en poussée, l'embrayage est chargé avec une valeur de pression commandée qui dépend de différentes valeurs d'influence, et **en ce que** la valeur réelle de la vitesse de rotation différentielle (dnK_IST) de l'embrayage n'est pas poursuivie jusqu'à une valeur nulle.

2. Procédé selon la revendication 1, **caractérisé en ce que** le niveau de pression (pAK) de l'embrayage est obtenu, dans le premier état et dans le deuxième état, à partir d'une valeur de décalage (pAK_OFF) et d'une valeur somme (pSUM) (pAK = pAK_OFF + pSUM), la valeur somme (pSUM) étant déterminée dans une mesure prédominante à partir du bilan du moment commandé (MK (ST)) de l'embrayage, du moment somme réglé (MK (RE)') de l'embrayage et du moment de changement en charge découplant (MLS_ENT), (pSUM = f (MK(ST), MK (RE', MLS_ENT)).

3. Procédé selon la revendication 2, **caractérisé en ce que** le moment commandé (MK (ST)) est déterminé dans une mesure prédominante à partir du moment dynamique de l'embrayage (MDYN_K) et du moment moteur (MMOT), (MK (ST) = f (MDYN_K, MMOT).

4. Procédé selon la revendication 2, **caractérisé en ce que** le moment somme réglé (MK (RE)') de l'embrayage est déterminé à partir du moment moteur dynamique (MDYN_MOT) et d'un moment réglé (MK (RE)) de l'embrayage.

5. Procédé selon la revendication 4, **caractérisé en ce que** le moment réglé (MK (RE)) dans le premier état de conduite est déterminé au moyen d'un régulateur dans une mesure prédominante à partir de la comparaison consigne/réelle d'une grandeur équivalente à la vitesse de rotation du moteur et d'une demande de puissance (DKI) d'un conducteur.

6. Procédé selon l'une des revendications précédentes, **caractérisé en ce que** la vitesse de rotation de consigne qui dépend de la vitesse (n_MOT_SW (i) ) est déterminée, pour une vitesse de la transmission à rapports étagés automatisée, au moyen d'un diagramme KF(i), ceci représentant une association de la demande de puissance du conducteur (DKI) et de la vitesse de rotation de sortie (nAB) de l'embrayage.

**7.** Procédé selon la revendication 6, **caractérisé en ce que** le passage du diagramme (KF(i1)) au diagramme (KF(i2)) est effectué au cours du passage de rapport avec interruption de la force de traction.

**8.** Procédé selon la revendication 4, **caractérisé en ce que** le moment réglé dans le deuxième état de conduite (MK (RE)) est déterminé au moyen d'un régulateur dans une mesure prédominant à partir de la comparaison consigne/réelle de la différence de vitesse de rotation (dnK_SW, dnK_IST) de l'embrayage et d'une demande de puissance (DKI) d'un conducteur.

**9.** Procédé selon la revendication 8, **caractérisé en ce que** le régulateur renferme un intégrateur limité, dans lequel, sont fournis comme grandeurs d'entrée, l'écart de réglage tiré de la comparaison consigne/réelle de la différence de vitesse de rotation (dnK_SW, dnK_IST) de l'embrayage, la vitesse de modification de la demande de puissance (DKI) et le rapport entre valeur réelle et valeur de consigne de la vitesse de rotation différentielle (dnK_IST / dnK_SW) de l'embrayage.

**10.** Procédé selon l'une des revendications précédentes, **caractérisé en ce que**, lors d'un passage du premier ou du troisième état de conduite au deuxième état de conduite, la valeur de consigne de la vitesse de rotation différentielle (dnK_SW) est transmise par l'intermédiaire d'un organe à retard dynamique, la valeur réelle actuelle de la vitesse de rotation différentielle (dnK_IST) étant prise comme valeur initiale pour cet organe.

**11.** Procédé selon l'une des revendications précédentes, **caractérisé en ce que**, à une vitesse du véhicule (v) inférieure à une valeur limite (GW), il s'établit une vitesse de rotation différentielle augmentée (dn_SW (i)) de l'embrayage en tant que protection anticalage par l'intermédiaire du deuxième diagramme (KF (i) ).

**12.** Procédé selon l'une des revendications précédentes, **caractérisé en ce que**, dans le deuxième état, à une vitesse du véhicule (v) inférieure à une valeur limite (GW), une vitesse de rotation différentielle augmentée (dn_SW (i) ) de l'embrayage est calculée en tant que protection anticalage, la vitesse de rotation différentielle (dn_SW (i)) étant réglée à un niveau plus élevé que la différence entre la vitesse de rotation extrême minimale du moteur à combustion interne (n_MOT_MIN) et de la vitesse de rotation de sortie de l'embrayage (nAB).

**13.** Procédé selon la revendication 1, **caractérisé en ce que** le niveau de pression (pAK) de l'embrayage est obtenu dans le troisième état à partir d'une valeur de pression qui dépend d'une ou plusieurs des grandeurs suivantes : volet de réglage, actionnement du frein, pression du frein, moment moteur, changement en charge.

**14.** Dispositif pour la mise en oeuvre d'un procédé pour commander et régler un embrayage dans une transmission à rapports étagés automatisée pour un véhicule automobile, en particulier d'un procédé selon l'une des revendications précitées, comprenant un appareil de commande électronique qui comporte un premier et un deuxième circuit de réglage, la grandeur réglée du premier circuit de réglage étant la valeur réelle de la vitesse de rotation du moteur (n_MOT_IST) et la grandeur réglée du deuxième circuit de réglage étant équivalente à la valeur réelle d'une vitesse de rotation différentielle (dnK_IST) de l'embrayage, la valeur réelle de la vitesse de rotation différentielle (dnK_IST) de l'embrayage n'étant pas poursuivie jusqu'à une valeur nulle.

EP 1 242 758 B1

Sollwert-Vorgabe 5

2. Zustand dnK_IST  1. Zustand n_Mot_IST

MK(ST)

MDyn_MOT aus Sollwert-Vorgabe 5

2. Zustand dnK_SW

1. Zustand n_Mot_SW

Regler

MK(RE)

A

MK(RE)'

B

Absolut 9

Konst. 10

pSUM

C

pAK

pAK_OFF

6

17

3

2

1

Fig. 1

Fig. 2

Fig. 3

Fig. 4